# EUROPÄISCHE PATENTSCHRIFT

(11) **EP 2 727 680 B1**
(45) Veröffentlichungstag und Bekanntmachung des Hinweises auf die Patenterteilung: **30.12.2015**
(21) Anmeldenummer: 13187822.5
(22) Anmeldetag: 09.10.2013
(51) Int. Cl.: B23K 37/02, B23K 26/06, B23K 26/08, B23K 26/38, B23K 26/40

(54) **Vorrichtung und Verfahren zum Schneiden mit Laser-Array**
Device for and method of cutting with laser array
Dispositif et procédé de coupage par lasers en rangées

(30) Priorität: 05.11.2012 DE 102012021723
(43) Veröffentlichungstag der Anmeldung: 07.05.2014
(73) Patentinhaber: Gallus Druckmaschinen GmbH, 35428 Langgöns-Oberkleen (DE)
(72) Erfinder: Bangel, Dieter, 35625 Hüttenberg (DE)
(74) Vertreter: Fritz, Martin Richard

(56) Entgegenhaltungen:
- WO-A1-02/14069
- WO-A1-2007/055691
- DE-A1- 4 442 411
- DE-A1- 10 037 198
- DE-A1- 10 231 032
- JP-A- S59 174 290
- KR-B1- 101 009 454

## Beschreibung

Die Erfindung betrifft eine Vorrichtung zum Schneiden, Ausschneiden und Perforieren gemäß dem Oberbegriff von Anspruch 1 und ein Verfahren zum Schneiden, Ausschneiden und Perforieren unter Verwendung einer gemäß einem der Anspüche 1 bis 6 definierten Vorrichtung gemäß Anspruch 10 (siehe, z.ß., JP 59/174290 A).

### Stand der Technik

Bei der Herstellung von Faltschachteln oder Etiketten ist es bekannt, die einzelnen Faltschachteln bzw. Etiketten aus bahnförmigen oder bogenförmigen Substraten auszustanzen. Dazu dienen mechanische Stanzeinrichtungen, wie beispielsweise Rotationsstanzen und Flachbettstanzen. Alternativ ist es auch bekannt, den Schnitt mit einem Laser auszuführen. So offenbart die WO 02/14069 A1 eine Einrichtung und ein Verfahren zum Ausstanzen von Selbstklebeetiketten mittels einem Laser. Dabei werden viele vom Laser im Substrat erzeugte Löcher zu einer Schneidelinie aneinandergereiht.

Aus der WO 99/29496 A1 ist eine Vorrichtung und ein Verfahren zur Bearbeitung von Faltschachteln bekannt, wobei in eine jeweilige Faltschachtel mittels eines Lasers Rilllinien eingebracht werden, welche später die Faltkanten der Faltschachtel darstellen. Gleichermaßen ist es bekannt, Faltschachteln mittels einer Laservorrichtung auszustanzen. Dabei werden die Laserstrahlen über motorisierte Kippspiegelablenksysteme auf die bahnförmigen oder bogenförmigen Substrate gerichtet und fahren dort die herzustellenden Schnittlinien bzw. Rilllinien ab.

Nachteilig bei derartigen Verfahren und Vorrichtungen ist das hohe Maß an mechanischem und steuerungstechnischem Aufwand. Damit einher gehen hohe Kosten, ein hoher Integrationsaufwand und ein großer Bauraumbedarf. Desweiteren ist es nicht möglich, in derartigen Systemen hohe Produktionsgeschwindigkeiten zu erreichen; die Bearbeitungsgeschwindigkeiten von bekannten Einstrahllasersystemen liegen deutlich unterhalb von Bearbeitungsgeschwindigkeiten von bekannten Schmalbahn-Rotationsdruckmaschinen. Soll die schneidende Bearbeitung inline zum Bedrucken der bahnförmigen oder bogenförmigen Substrate erfolgen, so muss in der Regel die Druckgeschwindigkeit reduziert werden. Weiter nachteilig ist, dass motorisch spiegelabgelenkte Einstrahllasersysteme eine begrenzte Arbeitsfläche aufgrund einer begrenzten Projektionsfläche aufweisen und eine Anpassung auf unterschiedliche Bahnbreiten bzw. Bogenformate des Substrats nur schwierig zu realisieren ist.

### Aufgabenstellung

Aufgabe der vorliegenden Erfindung ist es daher, eine Vorrichtung zum Schneiden, Ausschneiden, Rillen und Perforieren von bahnförmigen oder bogenförmigen Substraten zu schaffen, welche die Nachteile des Standes der Technik zumindest reduziert und kostengünstig herstellbar ist als auch ein Verfahren zum Schneiden, Ausschneiden, Rillen und Perforieren von bahnförmigen oder bogenförmigen Substraten zu beschreiben welches die Nachteile des Standes der Technik zumindest reduziert und eine hohe Bearbeitungsgeschwindigkeit ermöglicht.

Gelöst wird diese Aufgabe durch eine Vorrichtung mit den Merkmalen von Anspruch 1.

Die erfindungsgemäße Vorrichtung dient dem Schneiden, Ausschneiden, Rillen und / oder Perforieren von bahnförmigen oder bogenförmigen Substraten, insbesondere zur Herstellung von Faltschachteln oder Etiketten und besitzt eine Transporteinrichtung zum Transportieren des Substrats in einer Transportebene, eine oberhalb oder unterhalb der Transportebene angeordnete Laserschneideinrichtung zum Bearbeiten des Substrats und eine Maschinensteuerung zum Ansteuern von zumindest der Transporteinrichtung und der Laserschneideinrichtung. Erfindungsgemäß weist die Laserschneideinrichtung mindestens ein sich über die Breite des Substrats, d. h. quer zur Transportrichtung, erstreckendes Laser-Array mit einzeln ansteuerbaren Lasern als Vertical-cavity Surface-emitting Laser (VCSEL). Vorteile ergeben sich durch den einfachen Aufbau der Laser-Arrays, welcher die Integration in begrenzte Bauräume ermöglicht und den mechanischen und steuerungstechnischen Aufwand stark reduziert. Vorteilhaft an der Verwendung von VCSEL ist deren hohe Zuverlässigkeit und Langlebigkeit.
Das Laser-Array kann bevorzugt aus mehreren Einzelarrays gebildet werden.
Vorteilhaft dabei ist, dass VCSEL-Arrays in ihrer geometrischen Form sehr genau und kostengünstig herstellbar sind, wodurch es ermöglicht wird, einzelne Arrays zueinander genau zu positionieren. Somit können mehrere VCSEL-Einzeln-Arrays zu einem modularen größeren Array zusammengesetzt werden. Vorteilhaft ist, dass ein Laser-Array über die gesamte Substratbreite aufgebaut werden kann. Somit ist es möglich, Substrate für die Herstellung von Faltschachteln oder Etiketten bei hohen Produktionsgeschwindigkeiten über die gesamte Substratbreite zu bearbeiten.

In einer besonders vorteilhaften und daher bevorzugten Weiterbildung der erfindungsgemäßen Vorrichtung besitzt das Laser-Array eine Mehrzahl von quer zur Transportrichtung nebeneinander angeordneten Einzel-Arrays. Auch kann das Laser-Array eine Mehrzahl von in Transportrichtung hintereinander angeordnete Einzel-Arrays besitzen. In vorteilhafter Weiterbildung sind die Einzel-Arrays versetzt zueinander angeordnet. Besonders vorteilhaft ist es, wenn das Laser-Array aus einer Mehrzahl von nebeneinander und versetzt hintereinander angeordneten Einzel-Arrays besteht. Durch diese versetzte Anordnung und die große Anzahl von einzelnen Laserlichtquellen entsteht innerhalb des Laser-Arrays eine Überlappung der Laserlichtquellen. Benachbarte Laserlichtquellen können somit bis zum Austausch eines defekten Einzel-Arrays die Aufgabe des defekten Einzel-Arrays bei der Bearbeitung des Substrats übernehmen. Auch bei nicht versetzter Anordnung der Einzel-Arrays besteht der Vorteil, dass diese im Falle eines Defekts einfach und kostengünstig ausgetauscht werden können.

Gemäß der Erfindung besitzt die Laserschneideinrichtung eine zwischen dem Laser-Array und der Transportebene angeordnete Optik. Diese kann beispielsweise derart ausgeführt sein, dass einzelne Laserstrahlen gebündelt werden, um eine partielle Leistungssteigerung zu erzielen. So kann ein jeweiliges Einzel-Array insbesondere als kohärent gekoppeltes Dioden-Laser-Emitter-Array ausgeführt sein, welches eine hohe Leistung und hohe Leistungsdichte bereitstellt.

In einer vorteilhaften Ausführungsform der erfindungsgemäßen Vorrichtung besitzt deren Maschinensteuerung eine Workflow-Anbindung, eine Standard-Schnittstelle und / oder ein Interface zur Eingabe von Schnittdaten. Schnittdaten meint dabei die Angabe der Geometrie und der Position auf dem Substrat der auszuführenden Schnitte, Ausschnitte, Rilllinien oder Perforationen. Die Schnittdaten können beispielsweise bereits aus der Druckvorstufe vorliegen.

In der erfindungsgemäßen Vorrichtung ist deren Maschinensteuerung mit einer auf das Substrat ausgerichteten Kamera, insbesondere einer CNN-Kamera, verbunden. Die Kamera ist stromaufwärtig der Laserschneideinrichtung angeordnet und dient dem Erfassen von Elementen, d.h. einzelnen Druckbildern, Nutzen oder Etiketten auf dem Substrat. Dabei erfolgt eine Erfassung der Kanten, sodass durch die Laserschneideinrichtung automatisch eine Bearbeitung des Substrats an den richtigen Positionen erfolgen kann.
Kanten lassen sich aus Grauwertbildern durch Gradientenfilter (z.B. Sobel-Filter) extrahieren und in Gradientenbildern ablegen. Die Gradientenbilder enthalten für jeden Bildpunkt Informationen über die Stärke (Betrag) und die Richtung einer Kante an der Position des Bildpunkts. Diese Information kann dazu verwendet werden, Kanten entlang ihrer Richtung zu verfolgen (Tracking). Damit wird die Pixelbasierte Kanteninformation in Listendarstellungen überführt. In einer nachfolgenden Auswertung können dann die Konturlisten als Objekte weiterverarbeitet werden.
Bei der Verfolgung von Kanten können Nebenbedingungen über die geometrische Form der zu extrahierenden Kante angesetzt werden, z.B. dass die verfolgten Kantenpunkte eine Gerade bilden sollen. Dann werden nur Punkte, welche diese Bedingung erfüllen, bei der Verfolgung berücksichtigt. Die Verfolgung überführt Kantenbereiche dann nicht mehr in Listendarstellungen sondern in geometrische Formen, z.B. Geradensegmente.
Weitere Beispiele für geometrische Formen sind Kreise und Ellipsen.

Die Erfindung betrifft auch ein Verfahren zum Schneiden, Ausschneiden, Rillen und / oder Perforieren von bahnförmigen oder bogenförmigen Substraten, insbesondere zur Herstellung von Faltschachteln oder Etiketten, mit einer wie obenstehend beschriebenen Vorrichtung, wobei das Substrat an einem Laser-Array mit einzeln ansteuerbaren Vertical Cavity Surface-emitting Lasern (VCSEL) vorbei bewegt und dabei bearbeitet wird, d. h. mit Schnitten, Beschnitten, Ausschnitten, Rilllinien und / oder Perforationen versehen wird. Hierdurch wird eine Bearbeitung bei hohen Transportgeschwindigkeiten des Substrats ermöglicht, siehe Anspruch 7.

Die beschriebene Erfindung und die beschriebenen vorteilhaften Weiterbildungen der Erfindung stellen auch in beliebiger Kombination miteinander vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Zeichnungen verwiesen.

### Ausführungsbeispiel

Die Erfindung soll an Hand bevorzugter Ausführungsbeispiele noch näher erläutert werden. Es zeigen in schematischer Darstellung:
- Fig. 1: eine erfindungsgemäße Schneidvorrichtung
- Fig. 2 a - c: die Laserschneideinrichtung
- Fig. 3 a - b: ein Laser-Array in zwei alternativen Anordnungen

Einander entsprechende Elemente und Bauteile sind in den Figuren mit gleichen Bezugszeichen versehen.

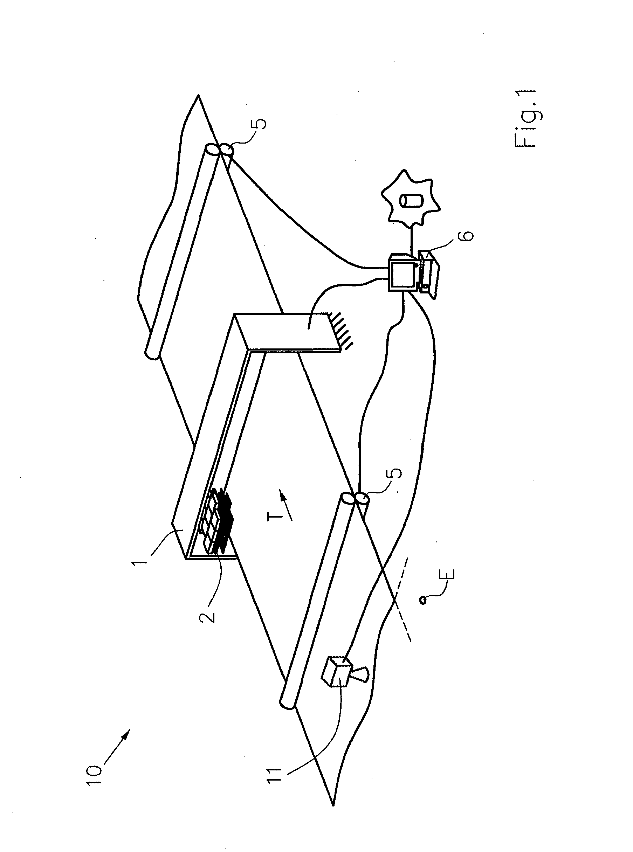

Figur 1 zeigt eine Vorrichtung zum Schneiden 10 zur Bearbeitung eines bahnförmigen Substrats 100. Die Vorrichtung zum Schneiden 10 besitzt eine Laserschneideinrichtung 1, eine Transporteinrichtung 5 und eine Maschinensteuerung 6. Das bahnförmige Substrat 100 wird von der Transporteinrichtung 5 in Transportrichtung T an der Laserschneideinrichtung 1 vorbei bewegt. Dabei kann das Substrat 100 von der Laserschneideinrichtung 1 in der Transportebene E bearbeitet werden, beispielsweise mit Ausschnitten, Einschnitten, Konturschnitten oder Rilllinien versehen werden. Die Bearbeitung erfolgt dabei durch ein Laser-Array 2 der Laserschneideinrichtung 1. Die erforderlichen Schnittdaten zur Ansteuerung des Laser-Arrays 2 können in der Maschinensteuerung 6 hinterlegt sein, in diese eingegeben werden oder von dieser über eine entsprechende Workflow-Anbindung beschafft werden.

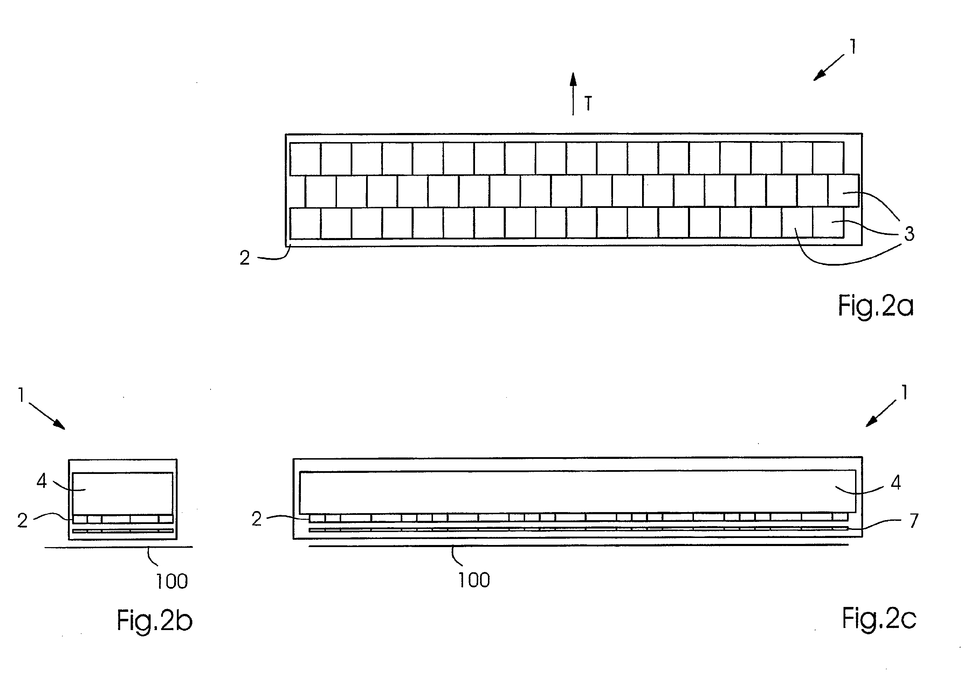

Der Aufbau der Laserschneideinrichtung 1 ist in den Figuren 2a, 2b und 2c näher dargestellt: Das Laser-Array 2 ist gemäß der Erfindung aus einer Mehrzahl von Einzelarrays 3 mit VCSEL-Lasern aufgebaut, wobei sowohl in Transportrichtung hintereinander als auch quer zur Transportrichtung nebeneinander mehrere Einzel-Arrays 3 angeordnet sind. In Transportrichtung T betrachtet sind die Einzel-Arrays 3 versetzt zueinander angebracht. Die Einzelarrays 3 werden von einem Gehäuse 4 aufgenommen, in welchem auch die Ansteuerung eines jeweiligen Einzellasers eines Arrays untergebracht ist. Zwischen den Einzel-Arrays 3 und einem zu bearbeitenden Substrat 100 ist gemäß der Erfindung eine Optik 7 vorgesehen.

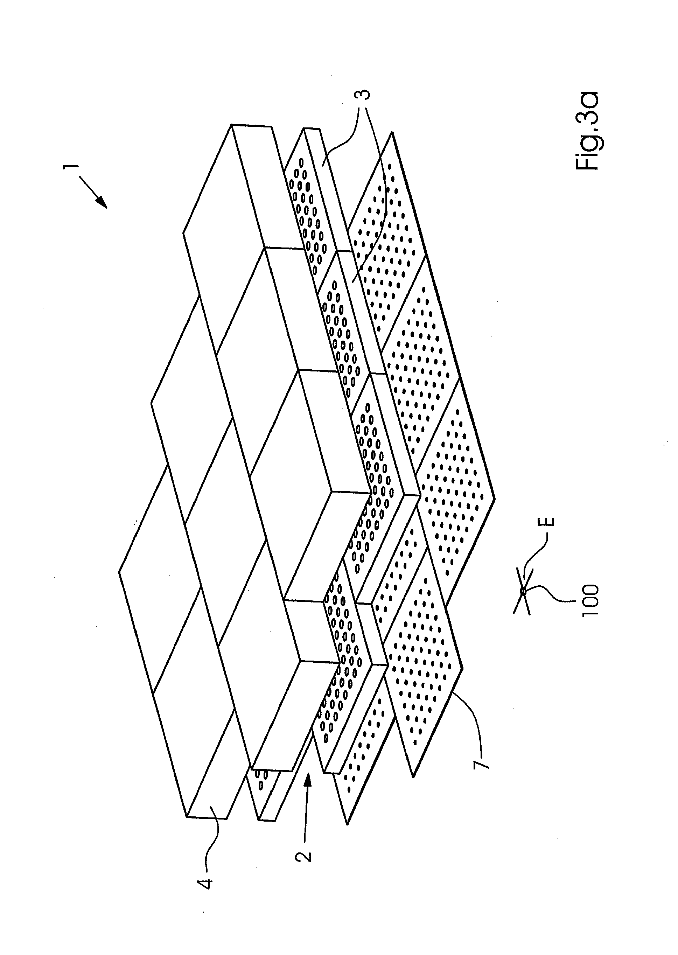

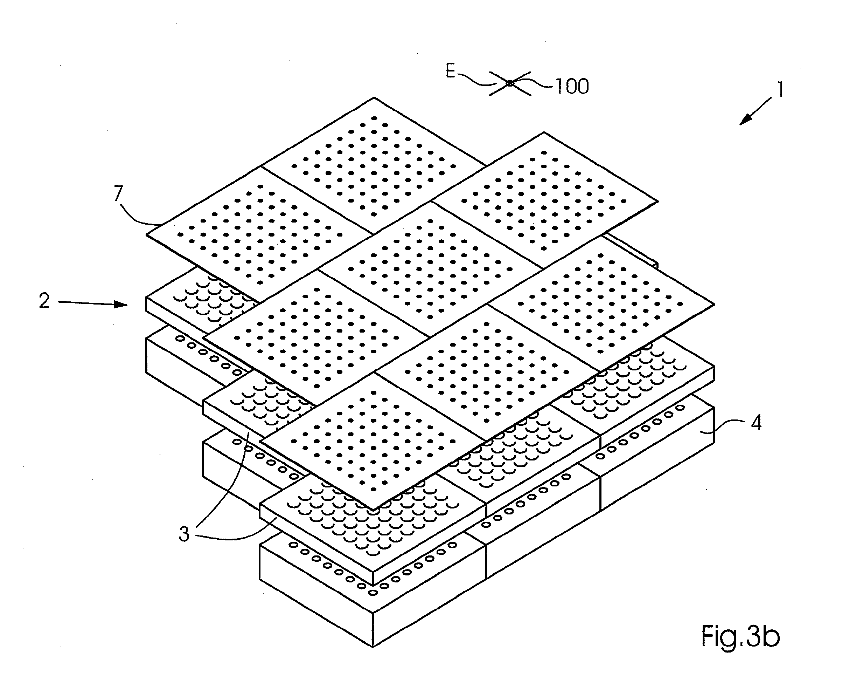

Die Figuren 3a und 3b zeigen den Aufbau der Laserschneideinrichtung 1 im Detail. Das Laser-Array 2 der Laserschneideinrichtung 1 besteht aus einer Mehrzahl von Einzel-Arrays 3 mit VCSEL-Lasern. Einem jeweiligen Einzel-Array 3 ist dabei sowohl ein Gehäuse 4 mit integrierter Laseransteuerung als auch eine Optik 7 zugeordnet. Die Optik 7 ist dabei als Mikrolinsenoptik aufgebaut, d. h. einem jeweiligen Lasereinzelstrahl ist eine eigene Optik zugeordnet. Zusätzlich könnte noch ein steuerbares Mikrospiegel-Array vorgeschaltet sein (nicht dargestellt), um die Auflösung bzw. die Punktdichte der Laserschneideinrichtung 1 zu erhöhen. In der Ausführungsvariante von Fig. 3a befindet sich die Laserschneideinrichtung 1 oberhalb der Transportebene E, in welcher ein Substrat 100 bewegt wird. In der Ausführungsvariante von Fig. 3b ist die Anordnung umgekehrt: Die Laserschneideinrichtung 1 befindet sich unterhalb der Transportebene E, in welcher ein Substrat 100 bewegt wird. In einer dritten, nicht dargestellten Ausführungsvariante kann auch vorgesehen sein, dass jeweils eine Laserschneideinrichtung 1 oberhalb als auch unterhalb der Transportebene E angeordnet ist, um ein jeweiliges Substrat 100 sowohl von oben als auch von unten bearbeiten zu können.

Die Maschinensteuerung 6 kann weiterhin gemäß der Erfindung mit einer auf das Substrat 100 gerichteten Kamera 11, insbesondere einer CNN-Kamera, verbunden sein. Die Kamera 11 ist stromaufwärtig - in Transportrichtung T gesehen - der Laserschneideinrichtung 1 angeordnet und dient dem Erfassen von gedruckten Elementen, d.h. einzelnen Druckbildern, Nutzen oder Etiketten auf dem Substrat 100. Die erforderlichen Rechenoperationen erfolgen in der Maschinensteuerung 6. Dabei erfolgt eine Erfassung der Kanten, sodass durch die Laserschneideinrichtung 1 automatisch eine Bearbeitung des Substrats 100 an den richtigen Positionen erfolgen kann, dass z.B. Etiketten ausgeschnitten werden können.

### Bezugszeichenliste

- 1: Laserschneideinrichtung
- 2: Laser-Array
- 3: Einzelarray mit VCSEL
- 4: Gehäuse mit Laseransteuerung
- 5: Transporteinrichtung
- 6: Maschinensteuerung
- 7: Optik (Mikrolinsen)
- 10: Vorrichtung zum Schneiden
- 11: Kamera

- 100: Substrat

- E: Transportebene
- T: Transportrichtung

## Patentansprüche

1. Vorrichtung (10) zum Schneiden, Ausschneiden und Perforieren von bahnförmigen oder bogenförmigen Substraten (100),
insbesondere zur Herstellung von Faltschachteln oder Etiketten, mit einer Transporteinrichtung (5) zum Transportieren des Substrats (100) in einer Transportebene (E) in einer Transportrichtung (T), mit einer oberhalb oder unterhalb der Transportebene (E) angeordneten Laserschneideinrichtung (1) zum Bearbeiten des Substrats (100) und
mit einer Maschinensteuerung (6) zum Ansteuern von zumindest der Transporteinrichtung (5) und der Laserschneideinrichtung (1),
wobei
die Laserschneideinrichtung (1) mindestens ein sich über die Breite des Substrats (100) erstreckendes Laser-Array (2) mit einzeln ansteuerbaren Lasern aufweist,
**dadurch gekennzeichnet,**
**dass** die Laser als Vertical-cavity surface-emitting Laser (VCSEL) ausgeführt sind, dass die Laserschneideinrichtung (1) eine zwischen dem Laser-Array (2) und der Transportebene (E) angeordnete Optik (7) besitzt und dass die Maschinensteuerung (6) mit einer stromaufwärtig der Laserschneideinrichtung (1) angeordneten Kamera (11) verbunden ist, zur Erfassung von Elementen auf dem Substrat (100).

2. Vorrichtung zum Schneiden, Ausschneiden und Perforieren von bahnförmigen oder bogenförmigen Substraten nach Anspruch 1,
**dadurch gekennzeichnet,**
**dass** das Laser-Array (2) eine Mehrzahl von quer zur Transportrichtung (T) nebeneinander angeordneter Einzel-Arrays (3) besitzt.

3. Vorrichtung zum Schneiden, Ausschneiden und Perforieren von bahnförmigen oder bogenförmigen Substraten nach einem der vorangehenden Ansprüche,
**dadurch gekennzeichnet,**
**dass** das Laser-Array (2) eine Mehrzahl von in Transportrichtung (T) hintereinander angeordneter Einzel-Arrays (3) besitzt.

4. Vorrichtung zum Schneiden, Ausschneiden und Perforieren von bahnförmigen oder bogenförmigen Substraten nach Anspruch 3,
**dadurch gekennzeichnet,**
**dass** die Einzel-Arrays (3) versetzt zueinander angeordnet sind.

5. Vorrichtung zum Schneiden, Ausschneiden und Perforieren von bahnförmigen oder bogenförmigen Substraten nach einem der vorangehenden Ansprüche,
**dadurch gekennzeichnet,**
**dass** ein jeweiliges Einzelarray (3) als kohärent gekoppeltes Dioden-Laser Emitter-Array ausgeführt ist.

6. Vorrichtung zum Schneiden, Ausschneiden und Perforieren von bahnförmigen oder bogenförmigen Substraten nach einem der vorangehenden Ansprüche,
**dadurch gekennzeichnet,**
**dass** die Maschinensteuerung (6) eine Workflow-Anbindung, eine Schnittstelle und / oder ein Interface aufweist zur Eingabe von Schnittdaten.

7. Verfahren zum Schneiden, Ausschneiden und Perforieren von bahnförmigen oder bogenförmigen Substraten (100),
insbesondere zur Herstellung von Faltschachteln oder Etiketten,
mit einer Vorrichtung (10) nach einem der vorangehenden Ansprüche, wobei das Substrat (100) an dem Laser-Array (2) mit einzeln ansteuerbaren Vertical-cavity surface-emitting Lasern (VCSEL) vorbeibewegt und dabei bearbeitet wird.

## Claims

1. Device (10) for cutting, cutting out and perforating web-shaped or sheet-shaped substrates (100),
in particular for producing folding boxes or labels, the device comprising a transport device (5) for transporting the substrate in a transport plane (E) in a transport direction (T), a laser cutting device disposed above or below the transport plane (E) and configured to process the substrate (100), and
a machine control system (6) for controlling at least the transport device (5) and the laser cutting device (1),
wherein
the laser cutting device (1) includes at least one laser array (2) extending across the width of the substrate (100) and including individually controllable lasers,
**characterized in**
**that** the laser are embodied as vertical-cavity surface-emitting lasers (VCSEL),
**that** the laser cutting device (1) has an optical system (7) disposed between the laser array (2) and the transport plane (E), and
**that** the machine control system (6) is connected to a camera (11) disposed upstream of the laser cutting device (1) to detect elements on the substrate (100).

2. Device for cutting, cutting out and perforating web-shaped or sheet-shaped substrates according to claim 1,
**characterized in**
**that** the laser array (2) has a plurality of individual arrays (3) disposed beside one another transversely relative to the transport direction (T).

3. Device for cutting, cutting out and perforating web-shaped or sheet-shaped substrates according to any one of the preceding claims,
**characterized in**
**that** the laser array (2) has a plurality of individual arrays (3) disposed one after the other in the transport direction (T).

4. Device for cutting, cutting out and perforating web-shaped or sheet-shaped substrates according to claim 3,
**characterized in**
**that** the individual arrays (3) are disposed to be offset relative to one another.

5. Device for cutting, cutting out and perforating web-shaped or sheet-shaped substrates according to any one of the preceding claims,
**characterized in**
**that** each respective individual array (3) is embodied as a coherently coupled diode-laser emitter array.

6. Device for cutting, cutting out and perforating web-shaped or sheet-shaped substrates according to any one of the preceding claims,
**characterized in**
**that** the machine control system (6) has a workflow link and/or an interface for inputting cutting data.

7. Method for cutting, cutting out and perforating web-shaped or sheet-shaped substrates (100), in particular for producing folding boxes or labels, using a device according to any one of the preceding claims,
wherein the substrate (100) is moved past the laser array (2) including individually actuatable vertical-cavity surface-emitting lasers (VCSEL) and is processed in the process.

## Revendications

1. Dispositif (10) pour la coupe, la découpe et la perforation de substrats (100) en forme de bande ou en forme de feuille, en particulier de boîtes en carton pliantes ou étiquettes avec un dispositif de transport (5) pour le transport du substrat (100) dans un plan de transport (E) dans une direction de transport (T), avec un dispositif de coupe au laser (1) disposé en dessous ou au-dessus du plan de transport (E) pour le traitement du substrat (100) et
avec une commande de machine (6) pour la commande d'au moins le dispositif de transport (5) et le dispositif de coupe au laser (1),
le dispositif de coupe au laser (1) présentant au moins un réseau de lasers avec deux lasers commandables individuellement,
**caractérisé en ce**
**que** les lasers sont conçus comme des lasers à cavité verticale et à émission par la surface (VCSEL),
**que** le dispositif de coupe au laser (1) possède un bloc optique (7) disposé entre le réseau de lasers et le plan de transport (E) et en ce que la commande machine (6) est reliée à une caméra (11) disposée en amont du dispositif de coupe au laser pour la détection d'éléments sur le substrat (100).

2. Dispositif pour la coupe, la découpe et la perforation de substrats en forme de bande ou en forme de feuille selon la revendication 1,
**caractérisé en ce**
**que** le réseau de lasers (2) possède une pluralité de réseaux de lasers individuels (3) disposés les uns à côté des autres transversalement à la direction de transport (T).

3. Dispositif pour la coupe, la découpe et la perforation de substrats en forme de bande ou en forme de feuille selon l'une des revendications précédentes,
**caractérisé en ce**
**que** le réseau de lasers (2) possède une pluralité de réseaux de lasers individuels (3) disposés les uns derrière les autres dans la direction de transport (T).

4. Dispositif pour la coupe, la découpe et la perforation de substrats en forme de bande ou en forme de feuille selon la revendication 3,
**caractérisé en ce**
**que** les réseaux individuels (3) sont disposés en décalé les uns par rapport aux autres.

5. Dispositif pour la coupe, la découpe et la perforation de substrats en forme de bande ou en forme de feuilles selon l'une des revendications précédentes,
**caractérisé en ce**
**qu'**un réseau de lasers (3) est réalisé comme un réseau émetteur laser à diodes couplé de manière cohérente.

6. Dispositif pour la coupe, la découpe et la perforation de substrats en forme de bande ou en forme de feuille selon l'une des revendications précédentes,
**caractérisé en ce**
**que** la commande machine (6) présente une connexion au Workflow, une interface et/ou une interface pour la saisie de données de coupe.

7. Procédé pour la coupe, la découpe et la perforation de substrats en forme de bande ou de feuille (100),
en particulier de boîtes en carton pliantes ou étiquettes avec un dispositif (10) selon l'une des revendications précédentes, le substrat (100) passe un réseau de lasers (2) doté de lasers à cavité verticale et à émission par la surface (VCSEL) pour son traitement.
